# EUROPÄISCHE PATENTANMELDUNG

(11) **EP 2 650 688 A2**
(43) Veröffentlichungstag der Anmeldung: **16.10.2013**
(21) Anmeldenummer: 13156548.3
(22) Anmeldetag: 25.02.2013
(51) Int. Cl.: G01P 21/02

(54) **Verfahren und Vorrichtung zum Überprüfen eines Drehzahlsystems einer motorbetriebenen Vorrichtung**

(30) Priorität: 12.04.2012 DE 102012205973
(71) Anmelder: ROBERT BOSCH GMBH, 70442 Stuttgart (DE)
(72) Erfinder: Wiszniewski, Jacek, 70771 Leinfelden-Echterdingen (DE); Pogorzelski, Kamil, 70176 Stuttgart (DE); Rombach, Daniel, 70794 Filderstadt (DE)

(57) **Zusammenfassung**

Es wird ein Verfahren zum Überprüfen eines Drehzahlsystems einer motorbetriebenen Vorrichtung vorgeschlagen. Gemäß einem ersten Aspekt ist bei einem Fehlen eines Drehzahlsignals vorgesehen, dass von einer Steuerungseinrichtung ein Testsignal über das Drehzahlsystem geschickt wird, wobei das Testsignal an einem Eingang der Steuerungseinrichtung erwartet wird. Bei einem Nicht-Erfassen des Testsignals wird ein Fehler des Drehzahlsystems erkannt.
Weitere Aspekte betreffen eine Überprüfung, ob nach dem Einschalten und Anlaufen, beim Unterschreiten eines definierten Motorstromes, nach einer definierten Anlaufzeit oder Betriebsdauer eine bestimmte Mindestgeschwindigkeit erreicht und angezeigt wird.

## Beschreibung

Die Erfindung betrifft ein Verfahren zum Überprüfen eines Drehzahlsystems einer motorbetriebenen Vorrichtung. Die Erfindung betrifft weiterhin eine Vorrichtung zum Überprüfen eines Drehzahlsystems einer motorbetriebenen Vorrichtung.

### Stand der Technik

Im Stand der Technik sind verschiedene Verfahren zum Erfassen und Überprüfen einer Drehzahl von motorbetriebenen Vorrichtungen bekannt.

### Offenbarung der Erfindung

Es ist eine Aufgabe der Erfindung, ein verbessertes Verfahren zum Überprüfen eines Drehzahlsystems einer motorbetriebenen Vorrichtung bereitzustellen.

Die Aufgabe wird gelöst mit einem Verfahren zum Überprüfen eines Drehzahlsystems einer motorbetriebenen Vorrichtung, aufweisend die Schritte:
a) Prüfen, ob an einem ersten Eingang einer Steuerungseinrichtung ein Drehzahlsignal anliegt;
b) Ausgeben eines Testsignals an einem Ausgang der Steuerungseinrichtung an das Drehzahlsystem für den Fall, dass in Schritt a) kein Drehzahlsignal anliegt; und im Falle, dass das ausgegebene Testsignal am ersten Eingang der Steuerungseinrichtung nicht sensiert wird;
c) Erkennen eines Fehlers des Drehzahlsystems.

Ein Vorteil des erfindungsgemäßen Verfahrens besteht darin, dass bei einem Ausbleiben eines Drehzahlsignals der motorbetriebenen Vorrichtung festgestellt werden kann, ob ein Defekt des Drehzahlsystems vorliegt. Das Verfahren kann vorteilhaft jedes Mal dann angewendet werden, wenn nicht klar ist, was die Gründe für das Ausbleiben des Drehzahlsignals sind.

Gemäß einem weiteren Aspekt der Erfindung wird die Aufgabe gelöst mit einem Verfahren zum Überprüfen eines Drehzahlsystems einer motorbetriebenen Vorrichtung, aufweisend die Schritte:
a) Einschalten der Vorrichtung;
b) Erfassen eines Motorstromsignals der Vorrichtung;
c) Erfassen eines Drehzahlsignals an einem zweiten Eingang einer Steuerungseinrichtung, und im Falle, dass kein Drehzahlsignal erfasst wird und das in Schritt b) erfasste Motorstromsignal einen definierten Pegel unterschreitet;
d) Erkennen eines Fehlers des Drehzahlsystems.

Ein Vorteil dieses Verfahrens besteht darin, dass vorhandene Eingänge der Steuerungseinrichtung verwendet werden, um ein Motorstromsignal auszuwerten. Nur für den Fall, dass kein Drehzahlsignal vorliegt und eine Höhe des Motorstroms einen definierten Wert unterschreitet, wird ein Fehlerfall des Drehzahlsystems erkannt.

Gemäß einem weiteren Aspekt der Erfindung wird die Aufgabe gelöst mittels eines Verfahrens zum Überprüfen eines Drehzahlsystems einer motorbetriebenen Vorrichtung, aufweisend die Schritte:
a) Einschalten der Vorrichtung;
b) Erfassen eines Drehzahlwerts der Vorrichtung, und für den Fall, dass ein definierter Drehzahlwert nach einer definierten Zeit nicht erreicht wurde;
c) Erkennen eines Fehlers der Vorrichtung.

Ein Vorteil dieses Verfahrens besteht darin, dass in einer so genannten "Softstartphase" der motorbetriebenen Vorrichtung überprüft wird, ob die motorbetriebene Vorrichtung nach einer definierten Zeit eine definierte Drehzahl erreicht hat. Falls dies nicht der Fall ist, wird ein Fehlerfall der Vorrichtung erkannt.

Gemäß einem weiteren Aspekt der Erfindung wird die Aufgabe mittels eines Verfahrens zum Überprüfen eines Drehzahlsystems einer motorbetriebenen Vorrichtung gelöst, aufweisend die Schritte:
a) Erfassen einer Drehzahl der Vorrichtung und im Falle, dass nach einer definierten Betriebsdauer der Vorrichtung eine definierte Drehzahl nicht erfasst wird;
b) Erkennen eines Fehlers der Vorrichtung.

Vorteilhaft kann auf diese Weise im regulären Betrieb der Vorrichtung überprüft werden, ob das Drehzahlsystem einwandfrei arbeitet.

Gemäß einem weiteren Aspekt wird die Aufgabe gelöst mit einer Vorrichtung zum Überprüfen eines Drehzahlsystems einer motorbetriebenen Vorrichtung, aufweisend eine Steuerungseinrichtung, welche einen Ausgang aufweist, über den im Falle eines Nichterfassens eines Drehzahlsignals an einem ersten Eingang der Steuerungseinrichtung ein Testsignal an das Drehzahlsystem geschickt werden kann, wobei im Falle, dass das ausgegebene Testsignal am ersten Eingang der Steuerungseinrichtung nicht sensiert wird, ein Fehler des Drehzahlsystems erkannt wird.

Weitere vorteilhafte Ausbildungen der Erfindung sind Gegenstand von Unteransprüchen.

Eine bevorzugte Ausführungsform des erfindungsgemäßen Verfahrens sieht vor, dass in einem weiteren Schritt der Ort und/oder die Art des Fehlers der Vorrichtung und/oder des Drehzahlsystems ermittelt werden. Vorteilhaft wird auf diese Weise eine Fehlerdiagnose durchgeführt. Dadurch kann es zum Beispiel einem Servicebereich erleichtert sein, den Fehler rasch und effizient zu lokalisieren und zu beheben.

Eine vorteilhafte Weiterbildung des Verfahrens sieht vor, dass in einem weiteren Schritt festgestellt wird, ob ein Fehler des Drehzahlgebers vorliegt und/oder ob ein Fehler der Drehzahlerfassungseinrichtung vorliegt. Dadurch wird vorteilhaft eine erweiterte Diagnose des Fehlerfalls durchgeführt.

Die Erfindung wird im Folgenden anhand von Figuren näher beschrieben. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren. Die Figuren sind vor allem dazu gedacht, die erfindungswesentlichen Prinzipien zu verdeutlichen.

In den Figuren zeigt:
- Fig. 1a: eine prinzipielle Darstellung einer Art einer Ausführung des erfindungsgemäßen Verfahrens;
- Fig. 1b: eine prinzipielle Darstellung einer weiteren Art einer Ausführung des erfindungsgemäßen Verfahrens; und
- Fig. 2: eine prinzipielle Darstellung einer weiteren Art einer Ausführung des erfindungsgemäßen Verfahrens.

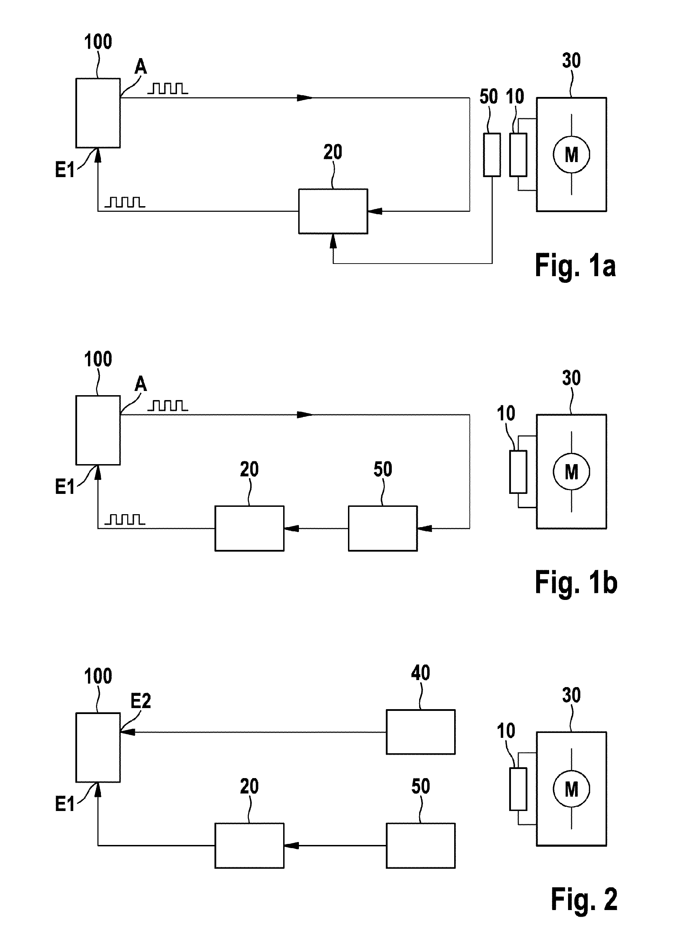

Fig. 1a zeigt in stark vereinfachter Form eine Möglichkeit, wie das erfindungsgemäße Verfahren ausführbar ist. Eine Steuerungseinrichtung 100 weist einen ersten Eingang E1 und einen Ausgang A auf. Über den Ausgang A wird eine Testsequenz bzw. ein Testsignal ausgegeben, falls am ersten Eingang E1 ein Drehzahlsignal einer motorbetriebenen Vorrichtung 30 nicht sensiert wird. Der Ausgang A kann dabei nur während des Ausgebens des Testsignals als Ausgang geschaltet sein, ansonsten kann er ein Open-Collector-Anschluss oder ein Eingang der Steuerungseinrichtung 100 sein. Das Drehzahlsignal wird über eine Drehzahlerfassungseinrichtung 20 geführt, die eine Drehzahl der motorbetriebenen Vorrichtung 30 erfasst, digitalisiert, filtert usw.

Beispiele für motorbetriebene Vorrichtungen 30 sind jegliche Arten von Elektrowerkzeugen, Waschmaschinen usw., bei denen in der Regel eine variable Drehzahl erfasst und überwacht wird. Für den Fall, dass das Drehzahlsignal am ersten Eingang E1 nicht anliegt, wird ein Testsignal, vorzugsweise ein Wechselsignal (z.B. ein pulsweitenmoduliertes Signal) über die Drehzahlerfassungseinrichtung 20 an die Steuerungseinrichtung 100 geschickt. Dadurch wird erwartet, dass die ausgegebene Testsequenz am ersten Eingang E1 der Steuerungseinrichtung 100 je nach Art der Verarbeitung des Testsignals in der Drehzahlerfassungseinrichtung 20 in einer definierten Art und Weise (beispielsweise identisch oder invertiert) vorliegt. Falls dies nicht der Fall ist, wird ein Fehlerfall der Drehzahlerfassungseinrichtung 20 erkannt und es werden entsprechende Aktionen veranlasst.

Fig. 1 b zeigt eine abgewandelte Möglichkeit einer Ausführung des erfindungsgemäßen Verfahrens. Es ist erkennbar, dass nunmehr das Testsignal zusätzlich über einen Drehzahlsensor 50 geführt wird, um auch die Funktionalität des Drehzahlsensors 50 zu überprüfen. Der Drehzahlgeber kann beispielsweise als ein Magnetgrad, welches auf eine Ankerwelle eines Elektromotors der motorbetriebenen Vorrichtung 30 gepresst ist, ausgebildet sein. Die Funktionsweise ist ansonsten die gleiche wie oben unter Bezugnahme auf Fig. 1a beschrieben.

Fig. 2 zeigt eine alternative Möglichkeit eines Verfahrens zur Überprüfung eines Drehzahlsystems einer motorbetriebenen Vorrichtung 30. Es wird mittels einer Motorstromerfassungseinrichtung 40 ein Motorstromsignal der motorbetriebenen Vorrichtung 30 erfasst (z.B. über einen Strommesswiderstand). Das genannte Signal wird an einem zweiten Eingang E2 der Steuerungseinrichtung 100 eingelesen. Gleichzeitig wird eine Drehzahl der motorbetriebenen Vorrichtung 30 erfasst und mittels des Drehzahlsensors 50 und der Drehzahlerfassungseinrichtung 20 am ersten Eingang E1 der Steuerungseinrichtung 100 eingelesen.

Für den Fall, dass keine Drehzahl am ersten Eingang E1 der Steuerungseinrichtung 100 erfasst wird und ein Wert des Motorstroms einen bestimmten Pegel unterschreitet, wird ein Fehlerfall der motorbetriebenen Vorrichtung 30 erkannt. Beispielsweise kann dies dadurch bedingt sein, dass ein Blockierfall der motorbetriebenen Vorrichtung 30 vorliegt, bei dem die Vorrichtung 30 durch äußere Einflüsse mechanisch blockiert ist und bei welchem ein Motorstrom außergewöhnlich groß sein kann. Es kann somit vorteilhaft unterschieden werden, ob tatsächlich ein Blockierfall der motorbetriebenen Vorrichtung 30 oder ein Fehler des Drehzahlsystems 10,20, 50 vorliegt. Je nach Fehlerfall können sodann geeignete Aktionen zur Behebung des Fehlers getroffen werden.

Eine weitere Abwandlung des erfindungsgemäßen Verfahrens besteht darin, dass in einer so genannten "Softstartphase" der motorbetriebenen Vorrichtung 30, in der die motorbetriebene Vorrichtung 30 langsam an die gewünschte Drehzahl herangeführt wird, überprüft wird, ob innerhalb einer definierten Zeitspanne eine vorgegebene Drehzahl erreicht wurde. Eine Regelung oder Steuerung der Drehzahl kann dabei z.B. mittels einer Phasenanschnittsteuerung oder mittels eines PWM- (pulsweitenmodulierten) Signals durchgeführt werden. Falls die Drehzahl nicht erreicht wurde, wird ein Fehler erkannt.

Eine weitere Abwandlung des erfindungsgemäßen Verfahrens besteht darin, dass in einer regulären Betriebsphase der motorbetriebenen Vorrichtung 30 ein Drehzahlwert beispielsweise in regelmäßigen Zeitabständen überprüft wird. Für den Fall, dass der Drehzahlwert nicht oder nur zum Teil erreicht ist, wird ein Fehlerfall erkannt.

Der Fehler des Drehzahlsystems kann z.B. daher resultieren, dass der Drehzahlsensor 50 und/oder der Drehzahlgeber 10 innerhalb der motorbetriebenen Vorrichtung 30 falsch positioniert oder defekt ist. Dies bewirkt eine Verfälschung oder ein Fehlen der Drehzahlsignale, die von der Drehzahlerfassungseinrichtung 20 weitergeleitet und mittels des erfindungsgemäßen Verfahrens als ein Fehler des Drehzahlsystems erkannt wird.

Ferner kann der Fehler auch aus Beschaltungsfehlern des Drehzahlsensors 50 bzw. der Drehzahlerfassungseinrichtung 20 bedingt sein.

Die Steuerungseinrichtung 100 kann beispielsweise als ein Mikrocontroller ausgebildet sein. Das erfindungsgemäße Verfahren kann dadurch vorteilhaft in Form eines Softwareprogramms für den Mikrocontroller implementiert werden. Ferner kann das erfindungsgemäße Verfahren auch auf computerlesbaren Datenträgern gespeichert und dadurch auf einfache Weise auf unterschiedlichen Steuerungseinrichtungen 100 implementiert bzw. ausgeführt werden.

Vorteilhaft ist zur Ausführung des erfindungsgemäßen Verfahrens keinerlei bzw. nur sehr wenig Zusatzaufwand erforderlich. Insbesondere ist an der Steuerungseinrichtung 100 ein zusätzlicher Testausgang vorzusehen, an den eine Testleitung angeschlossen wird, über die das genannte Testsignal bzw. die Testsequenz übertragen wird.

Es versteht sich von selbst, dass die genannten Aspekte der Erfindung beliebig miteinander kombiniert werden können, so dass je nach Bedarf und Anwendungsfall eher ein Testsignal-basierter Ansatz und/oder ein Analyse-basierter Ansatz des erfindungsgemäßen Verfahrens angewendet werden kann. Wird eine Kombination der vorgenannten Ansätze implementiert, so kann vorteilhaft je nach Fehlerart unterschieden werden, ob der Drehzahl-Signalgeber oder der Drehzahl-Signalempfänger defekt ist.

Zusammenfassend wird mit der Erfindung ein Verfahren zum Überprüfen eines Drehzahlsystems ("Tacho-System") und der motorbetriebenen Vorrichtung einer motorbetriebenen Vorrichtung vorgeschlagen, mit dem das Drehzahlsystem in einen sicheren und definierten Zustand versetzt werden kann. Das Verfahren ermöglicht es zum Beispiel einem Service- bzw. Kundendienstbereich, gezielte Aktionen zur Behebung von Fehlern des Drehzahlsystems vorzunehmen. Vorteilhaft ist das erfindungsgemäße Verfahren bei Erzeugnissen mit Universalmotoren bzw. mit Elektromotoren mit Anker/Läufer durchführbar, bei denen eine Drehzahlerfassung mittels einer Elektronik durchgeführt wird.

Der Fachmann wird die Merkmale der Erfindung in geeigneter Weise abändern oder miteinander kombinieren können, ohne vom Kern der Erfindung abzuweichen.

## Patentansprüche

1. Verfahren zum Überprüfen eines Drehzahlsystems (10,20,50) einer motorbetriebenen Vorrichtung (30), aufweisend die Schritte:
a) Prüfen, ob an einem ersten Eingang (E1) einer Steuerungseinrichtung (100) ein Drehzahlsignal anliegt;
b) Ausgeben eines Testsignals an einem Ausgang (A) der Steuerungseinrichtung (100) an das Drehzahlsystem (10,20,50) für den Fall, dass in Schritt a) kein Drehzahlsignal anliegt, und im Falle, dass das ausgegebene Testsignal am ersten Eingang (E1) der Steuerungseinrichtung (100) nicht sensiert wird;
c) Erkennen eines Fehlers des Drehzahlsystems (10,20,50).

2. Verfahren zum Überprüfen eines Drehzahlsystems (10,20,50) einer motorbetriebenen Vorrichtung (30), aufweisend die Schritte:
a) Einschalten der Vorrichtung (30);
b) Erfassen eines Motorstromsignals der Vorrichtung (30);
c) Erfassen eines Drehzahlsignals an einem zweiten Eingang (E2) einer Steuerungseinrichtung (100), und im Falle, dass kein Drehzahlsignal erfasst wird und das in Schritt b) erfasste Motorstromsignal einen definierten Pegel unterschreitet;
d) Erkennen eines Fehlers des Drehzahlsystems (10,20,50).

3. Verfahren zum Überprüfen eines Drehzahlsystems einer motorbetriebenen Vorrichtung (30), aufweisend die Schritte:
a) Einschalten der Vorrichtung (30);
b) Erfassen eines Drehzahlwerts der Vorrichtung (30), und für den Fall, dass ein definierter Drehzahlwert nach einer definierten Zeit nicht erreicht wurde;
c) Erkennen eines Fehlers der Vorrichtung (30).

4. Verfahren zum Überprüfen eines Drehzahlsystems (10,20,50) einer motorbetriebenen Vorrichtung (30), aufweisend die Schritte:
a) Erfassen einer Drehzahl der Vorrichtung (30) und im Falle, dass nach einer definierten Betriebsdauer der Vorrichtung (30) eine definierte Drehzahl nicht erfasst wird;
b) Erkennen eines Fehlers der Vorrichtung (30).

5. Verfahren nach Anspruch 1 und 2.

6. Verfahren nach Anspruch 1 und 3.

7. Verfahren nach Anspruch 1 und 4.

8. Verfahren nach Anspruch 2 und 3.

9. Verfahren nach Anspruch 2 und 4.

10. Verfahren nach Anspruch 1 bis 3.

11. Verfahren nach Anspruch 1 bis 4.

12. Verfahren nach einem der Ansprüche 1 bis 11, wobei in einem weiteren Schritt ein Ort und/oder eine Art des Fehlers der Vorrichtung (30) und/oder des Drehzahlsystems (10,20,50) ermittelt werden.

13. Verfahren nach Anspruch 12, wobei in einem weiteren Schritt festgestellt wird, ob ein Fehler des Drehzahlgebers (10) vorliegt und/oder ob ein Fehler der Drehzahlerfassungseinrichtung (20) und/oder des Drehzahlsensors 50 vorliegt.

14. Computerprogrammprodukt mit Programmcodemitteln zur Durchführung des Verfahrens nach einem der Ansprüche 1 bis 13, wenn es auf einer elektronischen Steuerungseinrichtung (100) abläuft oder auf einem computerlesbaren Datenträger gespeichert ist.

15. Vorrichtung zum Überprüfen eines Drehzahlsystems (10,20,50) einer motorbetriebenen Vorrichtung (30), aufweisend eine Steuerungseinrichtung (100), welche einen Ausgang (A) aufweist, über den im Falle eines Nichterfassens eines Drehzahlsignals an einem ersten Eingang (E1) der Steuerungseinrichtung (100) ein Testsignal an das Drehzahlsystem (10,20,50) geschickt werden kann, wobei im Falle, dass das ausgegebene Testsignal am ersten Eingang (E1) der Steuerungseinrichtung nicht sensiert wird, ein Fehler des Drehzahlsystems (10,20,50) erkannt wird.
